(19) Europäisches Patentamt
European Patent Office
Office européen des brevets

(11) **EP 1 715 245 B1**

(12) **FASCICULE DE BREVET EUROPEEN**

(45) Date de publication et mention
de la délivrance du brevet:
**24.10.2007 Bulletin 2007/43**

(51) Int Cl.:
*F21S 8/12* (2006.01)     *B60Q 1/26* (2006.01)
*G02B 6/00* (2006.01)     *F21V 7/00* (2006.01)

(21) Numéro de dépôt: **06290650.8**

(22) Date de dépôt: **20.04.2006**

(54) **Module d'éclairage donnant un faisceau lumineux avec coupure pour véhicules**

Beleuchtungseinheit für Kraftfahrzeuge mit einer Lichtverteilung mit einer Hell-Dunkel Grenze

Lighting assembly for véhicles with a light distribution having a cutoff

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **21.04.2005 FR 0504019**

(43) Date de publication de la demande:
**25.10.2006 Bulletin 2006/43**

(73) Titulaire: **VALEO VISION**
**93012 Bobigny Cédex (FR)**

(72) Inventeur: **Albou, Pierre**
**75013 Paris (FR)**

(74) Mandataire: **Renous Chan, Véronique**
**Valeo Vision,**
**34, rue Saint-André**
**93012 Bobigny Cedex (FR)**

(56) Documents cités:
**EP-A- 1 357 333     EP-A- 1 357 334
DE-A1- 10 318 952     FR-A- 2 851 030
US-A1- 2002 080 615**

**Description**

L'invention est relative à un module d'éclairage propre à donner un faisceau lumineux avec coupure pour projecteur de véhicule automobile, du genre de ceux qui comprennent :

- une source lumineuse, en particulier formée par au moins une diode électroluminescente,
- un réflecteur,
- un dioptre ou une lentille de sortie,
- et une plieuse réfléchissante, dont un bord situé au voisinage du foyer/de la ligne de foyers de la lentille/du dioptre détermine la ligne de coupure du faisceau sortant du module.

Un module de ce type est connu, par exemple d'après EP 1 357 334. Le mode de réalisation illustré par la figure 4 correspond à une pièce optique pleine qui peut être réalisée par moulage en matériau transparent. Toutefois, pour permettre la réflexion des rayons lumineux émis par la source dans le volume de réflexion délimité par le réflecteur, la surface externe du réflecteur et de la plieuse est revêtue d'un matériau réfléchissant.
La mise en place du revêtement réfléchissant, par exemple par aluminiage, est relativement délicate et coûteuse.
L'invention a pour but, surtout, de fournir un module d'éclairage donnant un faisceau à coupure qui ne nécessite aucun revêtement réfléchissant, en particulier aucun aluminiage et qui n'exige que peu d'opérations d'assemblage, de façon à éliminer les opérations et tolérances critiques.
En effet, une opération de dépôt de revêtement réfléchissant crée des pertes par réflexion spéculaire. Une opération d'assemblage crée des imprécisions de positionnement relatif de différentes pièces.
Selon l'invention, un module d'éclairage du genre défini précédemment est tel que :

- la source lumineuse est combinée avec un collimateur pour donner un faisceau assimilable à un faisceau parallèle substantiellement orthogonal à un plan de sortie du collimateur,
- le réflecteur, par exemple de type parabolique, reçoit le faisceau parallèle de sortie du collimateur pour le faire substantiellement converger vers un lieu de foyers situé au bord de la plieuse,
- le dioptre ou la lentille dévie verticalement les rayons lumineux provenant du réflecteur et/ou de la plieuse de façon à former la coupure,
- le réflecteur et le dioptre ou la lentille sont réunis en une seule pièce en matière transparente, et la surface du réflecteur ainsi que celle de la plieuse travaillent en réflexion totale selon une interface air/matière transparente.

De préférence, le lieu de foyers situé au bord de la plieuse est confondu avec ou au voisinage du foyer ou de la ligne de foyers de la lentille/du dioptre.
On comprend par « dioptre ou lentille » un dioptre faisant office de lentille, ou une lentille au sens strict du terme. Il peut aussi s'agir d'une pluralité de dioptres associés.
On comprend par « faisceau assimilable à un faisceau parallèle » un faisceau globalement parallèle, l'homme de l'art sachant qu'un faisceau n'est véritablement parallèle que pour une source de lumière théorique ponctuelle (en réalité il a tendance à être légèrement divergent).
Le réflecteur, comme détaillé plus loin, n'est pas nécessairement de type parabolique, notamment dans le cas où l'on crée un faisceau courbé, selon un exemple détaillé dans la suite du texte (cas 3).
On peut définir le « lieu de foyers » de la plieuse comme le sous ensemble de l'espace par lequel passent tous les rayons du faisceau assimilable à une faisceau parallèle réfléchi par le réflecteur. Avantageusement, il peut prendre différentes formes : il peut s'agir

- d'un bord linéaire de la plieuse
- d'un bord courbe de la plieuse
- d'un bord associant une ou plusieurs parties linéaires avec une ou plusieurs parties courbes de la plieuse
- d'un point de la plieuse

Avantageusement, réflecteur et dioptre/lentille travaillent sans, ou substantiellement sans, revêtement réfléchissant, dont on a vu les inconvénients précédemment. On n'exclut cependant pas du cadre de l'invention la présence d'un revêtement, notamment dans les zones non optiquement actives de l'ensemble pour des raisons esthétiques, ou sur une portion réduite des zones optiques pour ajuster très précisément son comportement optique. Une caractéristique importante de l'invention demeure cependant que tout revêtement, réfléchissant ou non, devient optionnel, et que, de préférence, on le supprime totalement de l'ensemble précité.
De préférence, le collimateur forme avec le réflecteur et le dioptre/la lentille une seule pièce en matière transparente.

La matière transparente du module présente un indice de réfraction supérieur à √2. Cette matière comprend, notamment est avantageusement constituée par, du PMMA (polyméthacrylate de méthyle).

La plieuse est formée avantageusement par une partie de surface substantiellement horizontale constituant une interface entre la matière transparente et l'air.

Selon une première possibilité, la source lumineuse est plus basse que la plieuse et la lumière provenant de la source est dirigée vers le haut pour être réfléchie par le réflecteur vers le bas en direction de la plieuse.

Dans le cadre du présent texte, on comprend les termes « haut », « bas », « horizontal », vertical » comme des indications d'orientation quand le module est disposé en position d'utilisation normale, une fois incorporé dans un dispositif d'éclairage monté dans un véhicule.

Selon une variante, la source lumineuse est plus haute que la plieuse et la lumière provenant de la source est dirigée vers le bas.

Le réflecteur peut être une surface cylindrique admettant pour directrice une parabole, le foyer du réflecteur étant alors formé par un segment de droite parallèle aux génératrices du cylindre, le bord de la plieuse étant rectiligne et parallèle aux génératrices du cylindre. La lentille/le dioptre est lui-même formé par une surface cylindrique à section droite selon une courbe convexe vers l'extérieur, et admettant des génératrices parallèles à celles du réflecteur.

En variante, le réflecteur peut être un paraboloïde de révolution avec foyer ponctuel situé sur le bord de la plieuse.

La plieuse peut présenter un bord incurvé et la surface du réflecteur est déterminée en fonction du bord incurvé de la plieuse.

Plusieurs modules peuvent être juxtaposés, notamment suivant la direction des génératrices de la lentille/du dioptre lorsque cette dernière/ce dernier est une portion de cylindre.

Avantageusement, la source lumineuse utilisée est une diode électroluminescente ou une pluralité de diodes électroluminescentes.

Par juxtaposition de plusieurs modules, on peut réaliser une ligne de coupure comportant un segment horizontal et un segment incliné sur l'horizontale.

Dans le cas où le réflecteur est du type paraboloïde de révolution, avec foyer ponctuel, la plieuse peut former un dièdre avec deux faces formant un angle de sorte que la coupure du faisceau issu du module présente elle-même un angle avec une partie substantiellement horizontale et une partie inclinée.

L'invention est également relative à un projecteur lumineux pour véhicule automobile comportant au moins un module tel que défini précédemment.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig. 1 est une coupe schématique du collimateur et du réflecteur d'un module selon l'invention, par un plan passant par l'axe optique du collimateur.

Fig. 2 est une coupe schématique, à plus petite échelle, du module par un plan vertical passant par l'axe optique du collimateur, la lentille étant représentée symboliquement, tandis que le collimateur et le réflecteur sont partiellement tracés.

Fig. 3 est une coupe verticale d'un module selon l'invention avec plieuse horizontale et source lumineuse située plus bas que la plieuse.

Fig. 4 est une vue de droite par rapport à Fig. 3.

Fig. 5 est une vue de dessus du module de Fig. 3, avec bord de plieuse rectiligne parallèle aux génératrices du réflecteur.

Fig. 6 est un schéma à plus grande échelle d'un détail de Fig. 3 illustrant différents rayons incidents sur le réflecteur.

Fig. 7 montre, semblablement à Fig. 5, un module avec plieuse dont le bord est formé par une ligne courbe convexe vers l'extérieur.

Fig.8 est un schéma illustrant la construction de la surface du réflecteur lorsque le bord de la plieuse est formé par une courbe selon Fig.7.

Fig. 9 est une coupe verticale d'une variante de réalisation avec plieuse située plus bas que la source lumineuse dont la lumière est dirigée vers le bas.

Fig. 10 est une vue de gauche par rapport à Fig. 9,et

Fig. 11 à 13 illustrent les courbes isolux obtenues avec divers modules selon l'invention.

Il convient de rappeler que l'invention vise à fournir un module d'éclairage, de préférence à diode électroluminescente, fournissant un faisceau lumineux à coupure, avec une plieuse sans revêtement réfléchissant, c'est-à-dire fonctionnant par réflexion interne.

Le faisceau à coupure peut être un faisceau antibrouillard, ou une partie de faisceau code, ou un faisceau pour fonction AFS. Dans des cas particuliers, évoqués par la suite, la coupure peut être formée par deux segments de droite formant un angle selon le faisceau code.

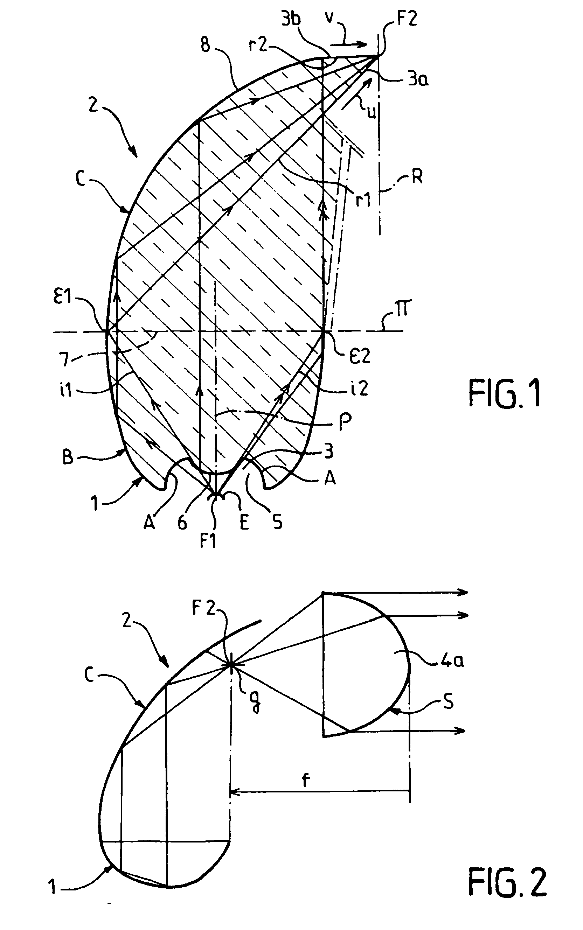

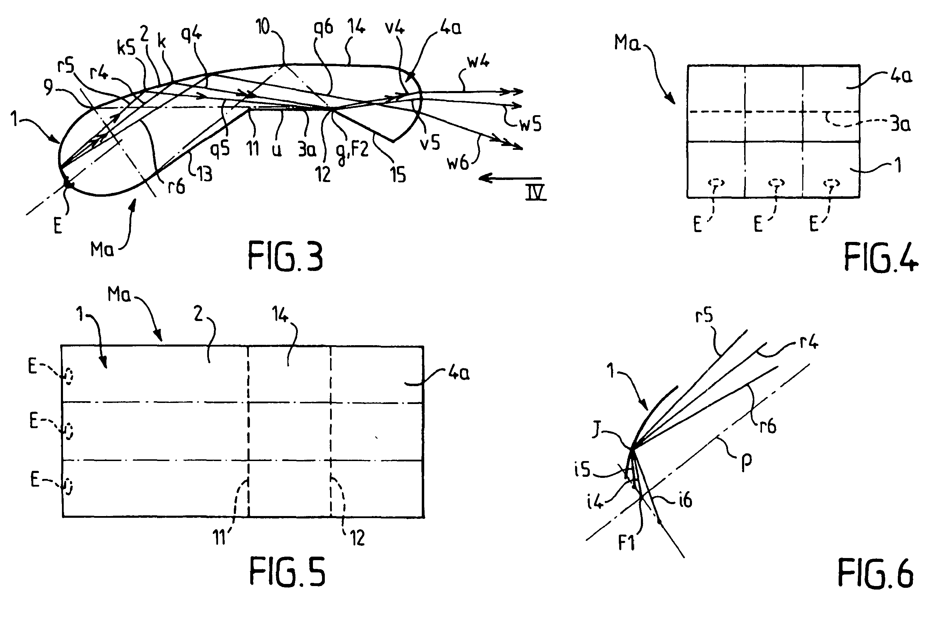

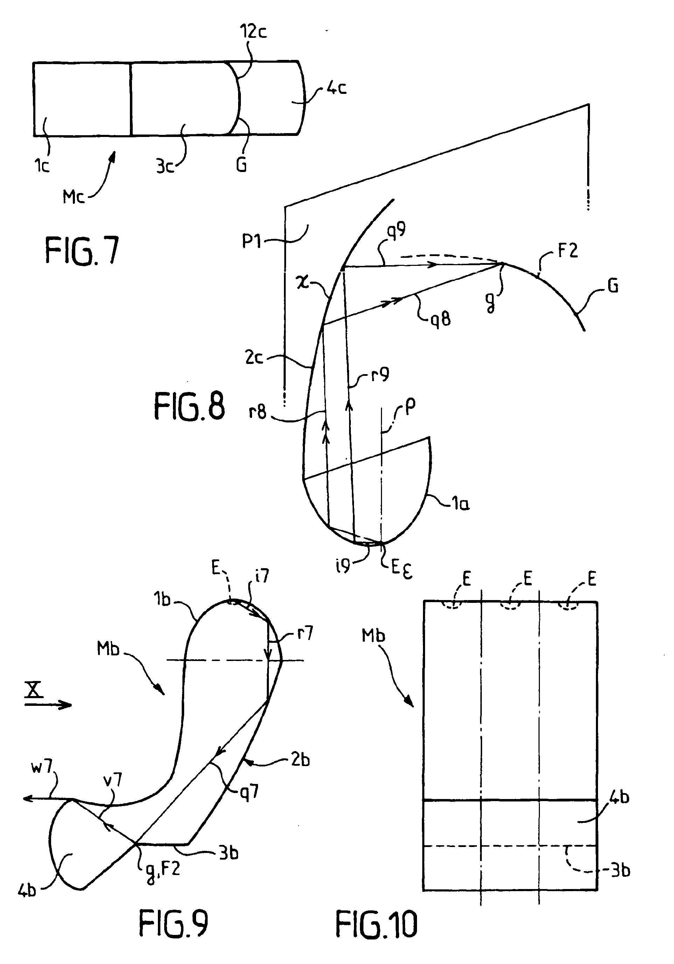

Les schémas des Fig. 1 et 2, complétés par les Fig.3 et 9, montrent que l'invention combine un collimateur 1, un réflecteur 2 de type paraboloïde fonctionnant par réflexion interne, une plieuse 3a (Fig. 3)ou 3b (Fig.9) fonctionnant également par réflexion interne, et une lentille 4a (Fig. 3) ou 4b (Fig. 9).

Le collimateur 1 (Fig.1) comporte un foyer F1 auquel est placée une source lumineuse E, de préférence une diode électroluminescente. Le collimateur 1 admet un axe optique ρ, disposé verticalement selon Fig. 1, et comporte à sa partie inférieure une cavité 3 délimitée au voisinage de l'axe optique ρ par une surface 6 convexe en direction du foyer F1. La surface 6 définit une lentille admettant ce foyer F1. La surface 6, généralement de révolution autour de l'axe optique ρ, est entourée par une surface de révolution A concave en direction du foyer F1. La surface A est de préférence une surface sphérique centrée sur F1.

La surface extérieure du collimateur 1 est celle d'un paraboloïde admettant F1 comme foyer. Le collimateur 1 est réalisé en matière transparente ayant un indice de réfraction égal ou supérieur à √2, tandis que la cavité 5 se trouve dans l'air. Un rayon lumineux issu du foyer F1 traverse la surface A sans être dévié et subit une réflexion interne sur la surface B séparant la matière transparente de l'air, pour sortir parallèlement à l'axe optique ρ, orthogonalement à la face de sortie 7 du collimateur située dans un plan Π orthogonal à l'axe ρ.

Les rayons lumineux provenant de F1 et tombant sur la face 6 de la lentille sont réfractés parallèlement à l'axe optique ρ.

Le faisceau de sortie du collimateur 1 est un faisceau parallèle à l'axe optique ρ.

Certaines diodes électroluminescentes peuvent être fournies avec un collimateur intégré et peuvent alors être utilisées avec une face d'entrée plane parallèle au plan Π, perpendiculaire au faisceau.

Si la surface A n'est pas une sphère centrée sur le foyer F1, alors la surface B convenable n'est pas exactement un paraboloïde. Si la surface A est tronconique, ce qui est la forme la plus simple à réaliser à cet endroit, on peut déterminer une surface qui permet une collimation en réflexion totale.

Le réflecteur 2 est du type paraboloïde et présente une surface 8 convexe vers l'extérieur constituant l'interface entre la matière du réflecteur et l'air. De préférence, la matière du réflecteur 2 est la même que celle du collimateur 1, et présente un indice de réfraction égal ou supérieur à √2. Cette matière est avantageusement du PMMA (polyméthacrylate de méthyle).

Le réflecteur 2 peut être constitué par une pièce distincte du collimateur 1 et assemblée à ce dernier, en particulier par collage, suivant le plan Π de la face de sortie 7. De préférence, le collimateur 1 et le réflecteur 2 forment une seule pièce.

La courbe C, correspondant à la coupe du réflecteur 2 par le plan des Fig. 1 et 2, est une parabole d'axe R parallèle à l'axe optique ρ du collimateur, et admettant comme foyer un point F2 situé sur l'axe R. Le faisceau de rayons parallèles à R, provenant du collimateur, est réfléchi pour converger vers le foyer F2.

Les rayons limites r1, r2 du faisceau convergeant vers F2 correspondent aux rayons incidents i1, i2 limites tombant respectivement sur les bords ε1 et ε2 de la face 7.

Le segment u du rayon r1 situé entre le foyer F2 et la droite parallèle à l'axe ρ passant par le point ε2 servira à déterminer une première surface de plieuse 3a (Fig.3). Le segment v, correspondant au rayon réfléchi r2 servira à déterminer une seconde surface de plieuse possible 3b (Fig.9).

En croisant le collimateur 1 avec le réflecteur 2 de type paraboloïde, on obtient en quelque sorte l'équivalent d'un ellipsoïde avec deux foyers F1 et F2. Toutes les réflexions internes sont totales, du moins pour des rayons issus du centre de la source E située au foyer F1.

Plusieurs possibilités sont offertes pour le réflecteur 2 :

**Cas 1**

Le réflecteur 2 peut être un cylindre parabolique d'axe et de génératrices perpendiculaires au plan de Fig.1, admettant pour directrice la courbe C ; dans ce cas, la convergence du faisceau réfléchi s'effectue suivant un segment de droite perpendiculaire au plan de Fig.2 et passant par le point F2.

**Cas 2**

Selon une autre possibilité, le paraboloïde 2 est de révolution et est obtenu en faisant tourner la courbe C autour de l'axe R. Le foyer F2 est alors ponctuel.

**Cas 3**

Le réflecteur 2 peut être une surface plus complexe qu'un paraboloïde et la courbe C représente alors simplement la section de cette surface par le plan de Fig. 2.

En général, le collimateur 1 reste un volume de révolution d'axe p, de même que l'indicatrice d'émission de la source E placée en F1.

Fig.2 illustre, sous forme de la courbe S, la section par un plan parallèle à l'axe R du réflecteur 2 d'une lentille 4a de distance focale f et dont le foyer est confondu avec le foyer F2, lui-même confondu avec un point g dont il sera question plus loin.

Fig.3 représente en coupe par un plan vertical un module Ma selon l'invention obtenu par réunion en une seule pièce de la lentille 4a, du réflecteur 2 et du collimateur 1. Le module Ma correspond au Cas 1 d'un réflecteur 2 formé par un cylindre parabolique de génératrices perpendiculaires au plan de la figure. La paroi du réflecteur 2, constituant l'interface avec l'air, travaille en réflexion totale et s'étend entre les points 9 et 10.

Le segment rectiligne u constituant la plieuse 3a travaille également en réflexion totale. La plieuse 3a s'étend entre les points 11 et 12. La surface 13, qui s'étend entre le collimateur 1 et la plieuse 3a, n'a pas de fonction optique et peut être choisie selon des considérations purement pratiques ; il en est de même pour la surface 14 s'étendant entre l'extrémité du réflecteur 2 et la lentille 4a, et pour la surface 15 s'étendant entre le bord avant de la plieuse 3a et la lentille 4a.

Un rayon i4 (voir Fig.6) provenant du foyer F1 et tombant en un point J de la surface du collimateur est réfléchi en r4 parallèlement à l'axe ρ du collimateur. Ce rayon tombe sur un point k (Fig.3) du réflecteur 2 et est réfléchi, par réflexion interne, suivant un rayon q4 qui tombe sur le bord avant de la plieuse 3a passant par le foyer F2. Ce rayon q4 est réfléchi, par réflexion interne, sur le bord avant de la plieuse 3a selon un rayon v4 qui sort de la lentille 4a selon le rayon w4 parallèlement à la plieuse 3a, c'est-à-dire parallèlement au plan horizontal.

La source lumineuse E n'étant pas absolument ponctuelle, des rayons lumineux provenant de points écartés de F1 tombent également en J comme illustré sur Fig.6. Un rayon i5 provenant d'un point plus proche de J que le foyer F1 tombe sur la surface du collimateur 1 selon un angle d'incidence plus fort que i4. Le rayon i5 est réfléchi suivant un rayon r5 situé au-dessus de r4 et vient frapper le réflecteur 2 en un point k5. Le rayon r5 est réfléchi suivant un rayon q5 qui tombe sur la plieuse 3a en arrière du bord avant passant par F2. Le rayon q5 est réfléchi suivant un rayon v5 et sort de la lentille 4a suivant un rayon w5 incliné vers le bas, au-dessous de l'horizontale, puisque le rayon v5, réfléchi sur 3a en arrière de F2, coupe le plan focal de la lentille 4a au-dessus du foyer F2.

Un rayon i6 provenant d'un point plus éloigné de J que F1 est d'abord réfléchi suivant r6 , puis sur le réflecteur 2 selon un rayon q6 dirigé vers le bas, passant au-dessus du bord avant de la plieuse et réfracté en sortie de lentille 4a suivant w6.

Ainsi, le faisceau lumineux sortant de la lentille 4a et provenant de la source E est situé au-dessous d'une ligne horizontale correspondant à l'image du bord avant de la plieuse 3a par la lentille 4a.

Un module élémentaire correspond à une source lumineuse E. Plusieurs modules par exemple trois modules peuvent être juxtaposés et ne former qu'une seule pièce comportant trois sources E se déduisant par translation l'une de l'autre parallèlement aux génératrices de la lentille cylindrique 4a et du paraboloïde cylindrique 8.

Le module Ma des Fig.3, 4 et 5 utilise la plieuse 3a correspondant au vecteur u de Fig.1.

Selon une autre possibilité illustrée sur Fig.9 et 10, un module Mb utilise comme plieuse l'interface 3b correspondant au segment v de Fig.1. La source lumineuse E est disposée au-dessus de la plieuse 3b et éclaire vers le bas. Le collimateur 1 b est situé en partie haute et est orienté vers le bas. Le faisceau lumineux sortant du collimateur 1 est parallèle à la verticale. Un rayon i7 issu du foyer est renvoyé par le collimateur selon r7 dirigé verticalement vers le bas, et tombe sur l'interface matière/air du réflecteur 2b. Le rayon i7 est renvoyé par réflexion interne selon q7 pour tomber sur le bord avant de la plieuse 3b, et être réfléchi en v7. Le rayon sort de la lentille 4b selon w7, parallèlement à la direction horizontale.

La surface de la lentille 4b est cylindrique à génératrices horizontales, perpendiculaires au plan de figure. Dans l'exemple considéré, le module Mb comporte trois sources E comme illustré sur Fig.10.

Les exemples de modules des Fig.3 et 9 correspondent à une plieuse 3a, 3b, dont le bord avant est un segment rectiligne, parallèle aux génératrices du réflecteur parabolique 2, ce qui permet d'utiliser plusieurs sources lumineuses E par module.

Selon le cas 2 évoqué précédemment, le réflecteur est constitué par un paraboloïde de révolution autour de l'axe R. Il n'est alors possible d'utiliser qu'une seule source lumineuse E par module ; en revanche on peut former une coupure en angle comportant un segment horizontal et un segment incliné sur l'horizontale, par exemple de 15˚ selon la réglementation, ou toute autre forme non rectiligne de coupure. Dans ce cas, la lentille 4a possède de préférence une surface de sortie de révolution autour de l'axe optique y du système défini un peu plus loin.

D'une manière plus générale, comme évoqué précédemment à propos du Cas 3, le réflecteur 2 en trois dimensions peut être une surface plus complexe qu'un paraboloïde. La courbe C est alors simplement la coupe du réflecteur par le plan de la feuille.

Le bord avant de la plieuse peut être constitué par une courbe G (voir Fig.8) continue et dérivable passant par F2 et située dans un plan orthogonal au plan de Fig.1.

Soit un point courant g de la courbe G, il faut déterminer dans un plan P1, orthogonal à la courbe G au point

g, l'arc $\chi$ de courbe qui représente l'intersection par le plan P1 d'un réflecteur 2a.

La courbe $\chi$ doit être telle que des rayons parallèles r8, r9 provenant du collimateur 1a, dont la section par le plan P1 est représentée sur Fig.8, convergent, après réflexion sur la courbe $\chi$, vers g suivant les rayons réfléchis q8, q9.

La courbe $\chi$ est calculée pour que le chemin optique des rayons provenant du collimateur 1a et réfléchis par la courbe $\chi$ jusqu'au point g soit constant.

Le calcul est exposé de manière plus complète ci-après.

On considère la courbe G continue et dérivable passant par $F_2$, entièrement contenue dans un plan perpendiculaire à celui de Fig.1. Pour tout point g de G on note $\vec{n}(g)$ la normale à G en g telle que $\vec{n}(g) \cdot \vec{y} > 0$, où $\overline{y}$ est un vecteur directeur de l'axe optique du système (voir plus loin). On suppose que :

$$\exists d \in \mathfrak{R}_+^{\bullet}$$

tel que

$$\forall (g, g') \in G^2, g \neq g',$$

$$(g, \vec{n}(g)) \cap (g', \vec{n}(g')) = \varnothing \text{ et } d((g, -\vec{n}(g)) \cap (g', -\vec{n}(g')), g) \geq d \text{ et }$$
$$d((g, -\vec{n}(g)) \cap (g', -\vec{n}(g')), g') \geq d$$

ou

$$\forall (g, g') \in G^2, g \neq g',$$
$$(g, -\vec{n}(g)) \cap (g', -\vec{n}(g')) = \varnothing \text{ et } d((g, \vec{n}(g)) \cap (g', \vec{n}(g')), g) \geq d \text{ et }$$
$$d((g, \vec{n}(g)) \cap (g', \vec{n}(g')), g') \geq d$$

où $(p, \vec{v})$ désigne une demi droite d'origine $p$ et de vecteur directeur $\vec{v}$ et $d(p_1, p_2)$ la distance euclidienne de $p_1$ à $p_2$.

Dans ces conditions soit, pour tout point g de G, $\vec{t}(g)$ un vecteur tangent à G en g et $\pi(g)$ le plan perpendiculaire à $\vec{t}(g)$ contenant g. On définit alors un réflecteur $\chi$ tel que

$$\forall g \in G, \forall p \in \chi \cap \pi(g), d(\Pi, p) + d(p, g) = K$$

où $\Pi$ est un plan arbitraire perpendiculaire à $\rho$ et K une constante caractéristique.

(Pour que $\chi$ existe comme surface d'un réflecteur physique, il convient que $\Pi$, K et d entretiennent des relations convenables ; en outre, des contraintes supplémentaires s'appliquent pour que $\chi$ récupère tous les rayons issus du collimateur. Si on suppose d suffisamment grand et $\Pi$ placé à la face supérieure du collimateur, on peut alors choisir $K = d(\varepsilon, F_2)$, où $\varepsilon$ est le point du collimateur appartenant à $\Pi$ le plus éloigné de $F_2$, intersection de G et du plan de la feuille, plan contenant l'axe $\rho$ et l'axe optique du système ; le choix convenable de $F_2$ et de la courbe G en général permet d'assurer la collection de tous les rayons.)

G est la courbe caractéristique du système et se ramène à un segment de droite dans le cas 1 et au point $F_2$ dans le cas 2. G (sous réserve des conditions d'existence du réflecteur données plus haut) permet de contrôler la répartition horizontale de la lumière.

En pratique, G a été construite en choisissant $F_2$, puis en imposant la direction de la normale en fonction de l'abscisse x (ce qui reflète plus intuitivement l'étalement horizontal donné au faisceau). G est alors la solution d'une équation différentielle.

Le reste de la construction du système se fait alors simplement en 2D dans les plans $\pi(g)$, pour tous les points g de G, comme il est montré sur Fig.2, f étant une constante arbitraire positive (si $\exists (g,g') \in G^2$, $g \neq g'$, tel que

$$\left(g, \vec{n}(g)\right) \cap \left(g', \vec{n}(g')\right) \neq \varnothing \,,$$ il faut en outre que f < d).

$S \cap \pi(g)$ est stigmatique dans $\pi(g)$ entre g et l'infini. S désigne la surface de la lentille 4a.

<u>Axe optique et plan de G</u> : deux possibilités :

$\alpha.\ y = \left(F_2, \vec{u}\right)$ et le plan de G est $\Gamma = \left(F_2, \vec{u}, \vec{x}\right)$

$\beta.\ y = \left(F_2, \vec{v}\right)$ et le plan de G est $\Gamma = \left(F_2, \vec{v}, \vec{x}\right)$ (cas particulier simple étudié : $\vec{v} \perp \rho$ )

Un tel système ne crée toutefois pas un faisceau à coupure, compte tenu de l'étendue de la source. On constate toutefois qu'une surface plane contenue dans $\Gamma$, de bord G et s'étendant suivant -y, jusqu'à l'enveloppe des rayons issus du collimateur travaille en réflexion totale avec les rayons qui l'atteignent et qui ne passent pas par G). Une telle surface agit alors comme un miroir de repliement et assure la présence d'une coupure, qui est l'image par S de l'arête formée par la matière le long de G.

On peut considérer différents modules : si leurs courbes caractéristiques $G_1,..., G_n$ sont contenues dans un même plan, si $\displaystyle\bigcup_{i=1}^{n} G_i$ est une courbe continue et dérivable et si les « focales » $f_1,..., f_n$ sont toutes identiques, alors il est possible d'assembler les modules de manière à ce que $\displaystyle\bigcup_{i=1}^{n} S_i$ soit une surface lisse (dans le cas 1 par exemple, la partie réflecteur, plieuse, surface de sortie se présente comme un élément extrudé -la pièce complète ne peut être extrudée en raison des parties collimatrices, qui sont des pièces de révolution autour d'axes parallèles à p).

Fig.7 est une vue de dessous d'un module Mc dont le bord avant de la plieuse 3c est délimité par une courbe G. La lentille 4c a une face avant qui n'est plus cylindrique à génératrices rectilignes mais dont la coupe par un plan horizontal est une courbe convexe vers l'extérieur.

Le faisceau obtenu avec un module dont le bord avant de la plieuse est formé par une courbe G convexe est plus étalé.

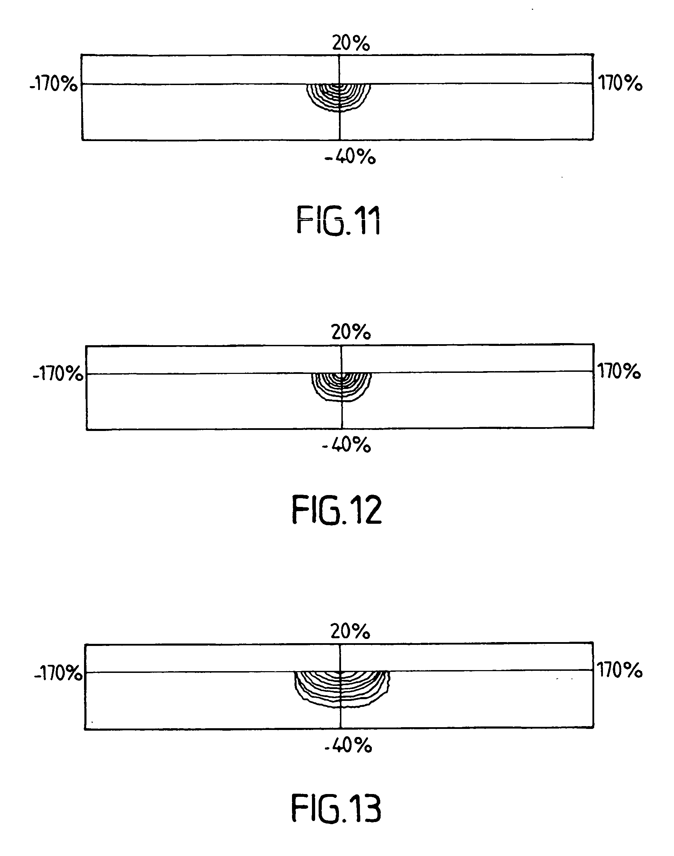

Fig.11 est un schéma illustrant les courbes isolux obtenues avec un module dont le réflecteur 2 correspond au cas 1, c'est-à-dire réflecteur 2 en forme de cylindre parabolique à génératrices horizontales. Comme montré par Fig. 11, la ligne de coupure est horizontale.

Fig.12 correspond au cas 2 où le réflecteur 2 est un paraboloïde de révolution admettant F2 comme foyer ponctuel. Les courbes isolux ressemblent à celles de Fig.11.

Fig.13 correspond à un module dont la plieuse est limitée par une courbe G convexe vers l'avant. La ligne de coupure reste horizontale, mais l'étalement du faisceau est plus important, en raison de la courbure du bord de la plieuse.

**Revendications**

1. Module d'éclairage propre à donner un faisceau lumineux avec coupure pour projecteur de véhicule automobile, comprenant :

   - une source lumineuse,
   - un réflecteur,
   - un dioptre faisant office de lentille de sortie, ou une lentille de sortie,
   - et une plieuse réfléchissante,

   **caractérisé en ce que :**

   - la source lumineuse (E) est combinée avec un collimateur (1,1a,1b) pour donner un faisceau assimilable à un faisceau parallèle, substantiellement orthogonal à un plan de sortie (II) du collimateur,

- le réflecteur (2,2b,2c) reçoit ledit faisceau de sortie du collimateur pour le faire substantiellement converger vers un lieu de foyers situé au bord de la plieuse,
- le dioptre ou la lentille dévie verticalement les rayons lumineux provenant du réflecteur et/ou de la plieuse de façon à former la coupure,
- le réflecteur (2,2b,2c) et le dioptre ou la lentille (4a,4b) sont réunis en une seule pièce en matière transparente, et la surface du réflecteur ainsi que celle de la plieuse (3a,3b) travaillent en réflexion totale selon une interface air/matière transparente.

**2.** Module d'éclairage selon la revendication précédente, **caractérisé en ce que** le lieu de foyers est un bord linéaire ou courbe ou est un point de la plieuse.

**3.** Module d'éclairage selon la revendication 1 ou 2, **caractérisé en ce que** le collimateur (1,1b) forme avec le réflecteur (2,2b) et le dioptre ou la lentille (4a,4b) une seule pièce en matière transparente.

**4.** Module d'éclairage selon l'une des revendications précédentes, **caractérisé en ce que** la matière transparente du module présente un indice de réfraction supérieur à $\sqrt{2}$ .

**5.** Module d'éclairage selon la revendication 3 ou 4, **caractérisé en ce que** la matière transparente comprend du PMMA (polyméthacrylate de méthyle).

**6.** Module d'éclairage selon l'une des revendications précédentes , **caractérisé en ce que** la plieuse est formée par une partie de surface horizontale (3a, 3b) constituant une interface entre la matière transparente et l'air.

**7.** Module d'éclairage selon la revendication 6 , **caractérisé en ce que** la source lumineuse (E) est plus basse que la plieuse (3a) et la lumière provenant de la source est dirigée vers le haut pour être réfléchie par le réflecteur (2) vers le bas en direction de la plieuse.

**8.** Module d'éclairage selon la revendication 6, **caractérisé en ce que** la source lumineuse (E) est plus haute que la plieuse (3b) et la lumière provenant de la source est dirigée vers le bas pour être réfléchie par le réflecteur (2b) vers le bas en direction de la plieuse.

**9.** Module d'éclairage selon l'une des revendications précédentes, **caractérisé en ce que** le réflecteur (2) est une surface cylindrique admettant pour directrice une parabole, le foyer du réflecteur étant formé par un segment de droite substantiellement parallèle aux génératrices du cylindre, le bord de la plieuse (3a, 3b) étant substantiellement rectiligne et parallèle aux génératrices du cylindre.

**10.** Module d'éclairage selon la revendication 9, **caractérisé en ce que** le dioptre (4a,4b) est lui-même formé par une surface cylindrique à section droite selon une courbe convexe vers l'extérieur, et admettant des génératrices substantiellement parallèles à celles du réflecteur.

**11.** Module d'éclairage selon l'une des revendications 1 à 8, **caractérisé en ce que** le réflecteur est un paraboloïde de révolution avec foyer ponctuel situé sur le bord de la plieuse.

**12.** Module d'éclairage selon l'une des revendications précédentes, **caractérisé en ce que** la plieuse présente un bord incurvé (G) et la surface du réflecteur (2c) est déterminée en fonction du bord incurvé de la plieuse.

**13.** Module d'éclairage selon l'une des revendications précédentes, **caractérisé en ce que** plusieurs modules sont juxtaposés, notamment suivant la direction des génératrices du dioptre.

**14.** Module d'éclairage selon l'une des revendications précédentes, **caractérisé en ce que** la plieuse forme un dièdre avec deux faces formant un angle de sorte que la coupure du faisceau issu du module présente elle-même un angle avec une partie horizontale et une partie inclinée.

**15.** Module d'éclairage selon l'une des revendications précédentes, **caractérisé en ce que** la source lumineuse (E) est une diode électroluminescente ou une pluralité de diodes électroluminescentes.

16. Projecteur lumineux pour véhicule automobile comportant au moins un module selon l'une des revendications précédentes.

## Claims

1. Lighting module which can provide a light beam with cut-off for a motor vehicle headlight, comprising:

   - a source of light;
   - a reflector;
   - a dioptre which acts as an output lens, or an output lens; and
   - a reflective folder,

   **characterised in that**:

   - the source of light (E) is combined with a collimator (1, 1a, 1b) in order to provide a beam which is similar to a parallel beam, substantially at right-angles to an output plane (II) of the collimator:
   - the reflector (2, 2b, 2c) receives the said output beam of the collimator in order to make it converge substantially towards a focal point situated at the edge of the folder;
   - the dioptre or the lens deflects vertically the rays of light obtained from the reflector and/or the folder, such as to form the cut-off;
   - the reflector (2, 2b, 2c) and the dioptre or the lens (4a, 4b) are combined in a single piece of transparent material, and the surface of the reflector, as well as that of the folder (3a, 3b) works in total reflection according to a transparent air/material interface.

2. Lighting module according to the preceding claim, **characterised in that** the focal point is a linear or curved edge, or it is a point on the folder.

3. Lighting module according to claim 1 or claim 2, **characterised in that** the collimator (1, 1b) forms together with the reflector (2, 2b) and the dioptre or the lens (4a, 4b) a single piece of transparent material.

4. Lighting module according to one of the preceding claims, **characterised in that** the transparent material of the module has an index of refraction greater than $\sqrt{2}$ .

5. Lighting module according to claim 3 or claim 4, **characterised in that** the transparent material comprises PMMA (polymethylmethacrylate).

6. Lighting module according to one of the preceding claims, **characterised in that** the folder is formed by a horizontal surface part (3a, 3b) which constitutes an interface between the transparent material and the air.

7. Lighting module according to claim 6, **characterised in that** the source of light (E) is lower than the folder (3a) and the light obtained from the source is directed upwards in order to be reflected by the reflector (2), downwards in the direction of the folder.

8. Lighting module according to claim 6, **characterised in that** the source of light (E) is higher than the folder (3b) and the light obtained from the source is directed downwards in order to be reflected by the reflector (2b), downwards in the direction of the folder.

9. Lighting module according to one of the preceding claims, **characterised in that** the reflector (2) is a cylindrical surface which admits a parabola as its directrix, the focal point of the reflector being formed by a segment of a straight line which is substantially parallel to the generatrices of the cylinder, the edge of the folder (3a, 3b) being substantially straight and parallel to the generatrices of the cylinder.

10. Lighting module according to claim 9, **characterised in that** the dioptre (4a, 4b) is itself formed by a cylindrical surface with a straight section according to a curve which is convex towards the exterior, and admits generatrices which are substantially parallel to those of the reflector.

**11.** Lighting module according to one of claims 1 to 8, **characterised in that** the reflector is a paraboloid generated by revolution with a focal point situated on the edge of the folder.

**12.** Lighting module according to one of the preceding claims, **characterised in that** the folder has a curved edge (G) and the surface of the reflector (2c) is determined according to the curved edge of the folder.

**13.** Lighting module according to one of the preceding claims, **characterised in that** several modules are juxtaposed, in particular according to the direction of the generatrices of the dioptre.

**14.** Lighting module according to one of the preceding claims, **characterised in that** the folder forms a dihedron with two surfaces forming an angle such that the cut-off of the beam obtained from the module itself forms an angle with a horizontal part and an inclined part.

**15.** Lighting module according to one of the preceding claims, **characterised in that** the source of light (E) is an electro-luminescent diode or a plurality of electro-luminescent diodes.

**16.** Headlight for a motor vehicle, comprising at least one module according to one of the preceding claims.


**Patentansprüche**

**1.** Beleuchtungseinheit für einen Kraftfahrzeugscheinwerfer zum Erzeugen eines Lichtbündels mit Hell-Dunkel-Grenze, mit:

    - einer Lichtquelle,
    - einem Reflektor,
    - einem als Austrittslinse dienenden Diopter oder einer Austrittslinse,
    - und einer reflektierenden Ablenkfläche,

**dadurch gekennzeichnet, dass**:

    - die Lichtquelle (E) mit einem Kollimator (1, 1a, 1b) kombiniert ist zum Erzeugen eines Lichtbündels, das vergleichbar einem Lichtbündel ist, welches zu einer Ausrittsebene (II) des Kollimators parallel und im Wesentlichen orthogonal ist,
    - der Reflektor (2, 2b, 2c) das Austrittslichtbündel des Kollimators aufnimmt, um es im Wesentlichen in Richtung einer Brennpunktstelle zu konvergieren, die am Rand der Ablenkfläche liegt,
    - der Diopter oder die Linse die vom Reflektor und/oder der Ablenkfläche ausgehenden Lichtstrahlen zum Bilden der Hell-Dunkel-Grenze vertikal ablenkt,
    - der Reflektor (2, 2b, 2c) und der Diopter oder die Linse (4a, 4b) in einem Stück aus lichtdurchlässigem Material vereint sind, und die Oberfläche des Reflektors sowie die der Ablenkfläche (3a, 3b) eine Totalreflexion an einer Grenzfläche zwischen Luft/lichtdurchlässigem Material bewirken.

**2.** Beleuchtungseinheit nach dem vorhergehenden Anspruch,
**dadurch gekennzeichnet, dass** die Brennpunktstelle ein gerader oder gebogener Rand oder ein Punkt der Ablenkfläche ist.

**3.** Beleuchtungseinheit nach Anspruch 1 oder 2,
**dadurch gekennzeichnet, dass** der Kollimator (1, 1 b) zusammen mit dem Reflektor (2, 2b) und dem Diopter oder der Linse (4a, 4b) ein einziges Stück aus lichtdurchlässigem Material bildet.

**4.** Beleuchtungseinheit nach einem der vorhergehenden Ansprüche,

**dadurch gekennzeichnet, dass** das lichtdurchlässige Material der Einheit einen Brechungsindex größer als $\sqrt{2}$ aufweist.

**5.** Beleuchtungseinheit nach Anspruch 3 oder 4,
**dadurch gekennzeichnet, dass** das lichtdurchlässige Material PMMA (Polymethylmethacrylat) enthält.

**6.** Beleuchtungseinheit nach einem der vorhergehenden Ansprüche,
**dadurch gekennzeichnet, dass** die Ablenkfläche durch einen Teil der horizontalen Fläche (3a, 3b) gebildet ist, der eine Grenzfläche zwischen dem lichtdurchlässigen Material und der Luft darstellt.

**7.** Beleuchtungseinheit nach Anspruch 6,
**dadurch gekennzeichnet, dass** die Lichtquelle (E) tiefer liegt als die Ablenkfläche (3a), und das von der Lichtquelle ausgehende Licht nach oben geleitet wird, um durch den Reflektor (2) nach unten in Richtung der Ablenkfläche reflektiert zu werden.

**8.** Beleuchtungseinheit nach Anspruch 6,
**dadurch gekennzeichnet, dass** die Lichtquelle (E) höher liegt als die Ablenkfläche (3b), und das von der Lichtquelle ausgehende Licht nach unten geleitet wird, um durch den Reflektor (2b) nach unten in Richtung der Ablenkfläche reflektiert zu werden.

**9.** Beleuchtungseinheit nach einem der vorhergehenden Ansprüche,
**dadurch gekennzeichnet, dass** der Reflektor (2) eine Zylinderfläche ist, die eine Parabel als Leitlinie aufweist, wobei der Brennpunkt des Reflektors durch einen Geradenabschnitt gebildet ist, der zu den Erzeugenden des Zylinders im Wesentlichen parallel ist, wobei der Rand der Ablenkfläche (3a, 3b) im Wesentlichen geradlinig und zu den Erzeugenden des Zylinders parallel ist.

**10.** Beleuchtungseinheit nach Anspruch 9,
**dadurch gekennzeichnet, dass** der Diopter (4a, 4b) seinerseits durch eine Zylinderfläche mit geradem Querschnitt entlang einer nach außen konvexen Kurve gebildet ist, die Erzeugende aufweist, die zu denen des Reflektors im Wesentlichen parallel sind.

**11.** Beleuchtungseinheit nach einem der Ansprüche 1 bis 8,
**dadurch gekennzeichnet, dass** der Reflektor ein Rotationsparaboloid mit einem auf dem Rand der Ablenkfläche gelegenen punktförmigen Brennpunkt ist.

**12.** Beleuchtungseinheit nach einem der vorhergehenden Ansprüche,
**dadurch gekennzeichnet, dass** die Ablenkfläche einen gebogenen Rand (G) aufweist, und die Oberfläche des Reflektors (2c) als Funktion des gebogenen Rands der Ablenkfläche festgelegt wird.

**13.** Beleuchtungseinheit nach einem der vorhergehenden Ansprüche,
**dadurch gekennzeichnet, dass** mehrere Einheiten insbesondere in der Richtung der Erzeugenden des Diopters nebeneinander liegen.

**14.** Beleuchtungseinheit nach einem der vorhergehenden Ansprüche,
**dadurch gekennzeichnet, dass** die Ablenkfläche einen Flächenwinkel mit zwei Seiten bildet, die einen Winkel so bilden, dass die Hell-Dunkel-Grenze des von der Einheit abgegebenen Lichtbündels ihrerseits einen Winkel aufweist, mit einem horizontalen Teil und einem schräg verlaufenden Teil.

**15.** Beleuchtungseinheit nach einem der vorhergehenden Ansprüche,
**dadurch gekennzeichnet, dass** die Lichtquelle (E) eine Leuchtdiode oder eine Mehrzahl von Leuchtdioden ist.

**16.** Kraftfahrzeugscheinwerfer mit wenigstens einer Einheit nach einem der vorhergehenden Ansprüche.

FIG.1

FIG.2

FIG.3

FIG.4

FIG.5

FIG.6

EP 1 715 245 B1

FIG.7

FIG.8

FIG.9

FIG.10

FIG.11

FIG.12

FIG.13

**EP 1 715 245 B1**

RÉFÉRENCES CITÉES DANS LA DESCRIPTION

**Documents brevets cités dans la description**

- EP 1357334 A